# EUROPÄISCHE PATENTANMELDUNG

(11) **EP 2 053 136 A1**
(43) Veröffentlichungstag der Anmeldung: **29.04.2009**
(21) Anmeldenummer: 09001237.8
(22) Anmeldetag: 18.12.2003
(51) Int. Cl.: C13D 1/08, A23N 1/00, C13D 1/00, C13D 1/10, C13D 3/00, B01D 11/04, C13C 3/00

(54) **Gewinnung von Inhaltsstoffen aus biologischem Material**

(30) Priorität: 18.12.2002 DE 10260983
(62) Teilanmeldung aus: 03782438.0
(71) Anmelder: Südzucker Aktiengesellschaft Mannheim/Ochsenfurt, 68165 Mannheim (DE)
(72) Erfinder: Frenzel, Stefan, 69469 Weinheim (DE); Michelberger, Thomas, 67269 Grünstadt (DE); Witte, Günter, 10423 Berlin (DE)
(74) Vertreter: Schrell, Andreas

(57) **Zusammenfassung**

Die vorliegende Erfindung betrifft ein Verfahren zur verbesserten Gewinnung von Inhaltsstoffen aus biologischem Material, nämlich Zuckerrohr oder Zichorie.

## Beschreibung

Die vorliegende Erfindung betrifft ein Verfahren zur verbesserten Gewinnung von Inhaltsstoffen aus biologischem Material, insbesondere aus Zuckerrüben (*Beta vulgaris*) beziehungsweise Zuckerrübenschnitzeln.

Aus einer Vielzahl verschiedenartigen biologischen Materials, insbesondere pflanzlicher Rohstoffe wie agrikulturell gewonnener Früchte, werden bekanntermaßen mit mechanischen und/oder thermischen Verfahren wertvolle Inhaltsstoffe gewonnen. Um diese Inhaltsstoffe aus dem biologischen Material abtrennen zu können, müssen in jedem Fall die Membranen des Zellmaterials, insbesondere der Pflanzenzelle, geöffnet werden. Dies geschieht in der Regel durch mechanische Krafteinwirkungen wie Schneiden, Reiben, Walzen etc. Andere Verfahren zum Aufschluss der Zellmembranen des biologischen Materials sind der thermische Zellaufschluss, wobei die Zellmembranen durch den Temperatureinfluss denaturiert werden, oder die Kombination von thermischen Verfahren und mechanischen Verfahren. Nach dem Aufschlussprozess werden die löslichen Inhaltsstoffe des biologischen Materials abgepresst, mit Lösungsmittel, meist Wasser, extrahiert oder im Falle nicht löslicher Stoffe ausgeschwemmt.

Solche Verfahren zur Gewinnung von Inhaltsstoffen aus biologischem Material sind besonders relevant für die Zuckerindustrie, da in Mitteleuropa bekanntermaßen zur Gewinnung von Zucker (Saccharose) Zuckerrüben (*Beta vulgaris)* in solchen Verfahren verarbeitet werden müssen, um daraus den Zucker zu gewinnen. Herkömmlicherweise werden dabei die gewaschenen Rüben in konventionellen Schneidmaschinen geschnitzelt und die erhaltenen Schnitzel in einer Schnitzelmaische mit heißem Wasser bei cirka 70 bis 75°C überbrüht. Dabei werden die Rübenzellen thermisch denaturiert, das heißt die Zellwände werden aufgeschlossen und dadurch durchlässig für Saccharosemoleküle. In einem anschließenden Extraktionsprozess, üblicherweise mittels Gegenstromextraktion, wird bei Temperaturen von cirka 68 bis 70°C ein saccharosehaltiger Extrakt (Rohsaft) gewonnen.

Um eine effektive Extraktion zu ermöglichen, muss bekanntermaßen ein erheblicher Anteil an Fremdwasser (Kondensat) zugesetzt werden. Zur Optimierung des Extraktionsvorgangs und zur Verminderung des Restgehalts an Zucker in den extrahierten Schnitzeln wird in den bekannten Verfahren in Bezug auf die Schnitzelmenge üblicherweise cirka 105% bis 110% Rohsaft abgezogen. Der Abzug berechnet sich aus dem Verhältnis der Extraktmenge zur eingesetzten Rübenmenge. Anschließend kann eine Saftreinigung des Extrakts durchgeführt werden.

Neben der für die Extraktion benötigten erheblichen Menge an Fremdwasser ist die Verarbeitung von biologischem Material zur Gewinnung der Inhaltsstoffe auch ein stark energieaufwändiges Verfahren. Insbesondere der thermische Aufschluss des biologischen Materials bei üblichen Temperaturen von über 70°C verlangt hohen Energieeintrag. Aber auch für den nachfolgenden Extraktionsschritt muss ein erheblicher Anteil an Fremdwasser auf Temperaturen über 70°C erhitzt und im weiteren Prozessverlauf wieder aufwändig verdampft werden. Es besteht daher aus dem Stand der Technik das Bedürfnis, biologisches Material, insbesondere Zuckerrüben beziehungsweise Zuckerrübenzellen, mit geringem Energieverbrauch aufzuschließen und durch Anwendung eines geeigneten nachgeschalteten Verfahrens die Wasser- und Energiemenge für die Gewinnung der Inhaltsstoffe aus dem biologischen Material zu reduzieren.

Ein weiterer und wesentlicher Gesichtspunkt ist die Entwässerbarkeit des extrahierten biologischen Materials. Beispielsweise werden für die Zuckergewinnung in der Bundesrepublik Deutschland jährlich etwa 27 Mio. t Zuckerrüben verarbeitet. Nach der wässrigen Gegenstromextraktion der zerkleinerten Rüben fallen dann 15 Mio. t extrahierter Schnitzel mit einem Wassergehalt von etwa 90 % an, die als Viehfutter genutzt werden. Um das Produkt haltbar und transportfähig zu machen, muss es weitgehend entwässert werden. Die Entwässerung erfolgt zunächst mechanisch durch Pressen und anschließend durch Trocken auf etwa 10 % Restwassergehalt. Grundsätzlich bedeutet eine höhere Abpressung einen höheren Verbrauch an elektrischer Energie, der der verminderten Brennstoffmenge für die Trocknung gegenüberzustellen ist. Da die Kosten für die mechanische Entwässerung bis zu einem Trockensubstanzgehalt von bisher etwa 35 % deutlich günstiger liegen als die für die Trocknung, ist die Verbesserung der Abpressung ein dauerndes Ziel der Zuckerindustrie. Der Kostendruck bei der Trocknung und die damit verbundenen Umweltschutzmaßnahmen haben dazu geführt, dass die mechanische Entwässerung stetig verbessert wurde. Der in 16 ausgewählten Fabriken ermittelte durchschnittliche Trockensubstanzgehalt von Pressschnitzeln stieg von knapp 20 % im Jahre 1976 auf durchschnittlich ca. 32 % im Jahre 1987 an. Sind nach einer Abpressung der extrahierten Schnitzel auf einen Trockensubstanzgehalt von 20 % noch etwa 44 % des mit den extrahierten Schnitzeln ausgeführten Wassers zu entfernen, so ist dieser Anteil bei einer Abpressung auf 30 % Trockensubstanz bereits auf ca. 25 % gesunken. Dies bedeutet eine erhebliche Energieeinsparung, die für eine Fabrik mit einer Tagesverarbeitung von 10.000 t Rüben bei ca. 500.000 EUR je Kampagne liegen kann (angenommener Ölpreis: 150 EUR/t). Daher besteht ein dringender Bedarf, die Abpressbarkeit, das heißt die Entwässerbarkeit, des biologischen Materials, insbesondere der Zuckerrübenschnitzel, nach der Extraktion weiter zu verbessern.

Aufgabe der vorliegenden Erfindung ist es, ein verbessertes Verfahren zur Gewinnung von Inhaltsstoffen aus biologischem Material sowie eine Vorrichtung zur Durchführung des verbesserten Verfahrens bereitzustellen, wobei sich das verbesserte Verfahren insbesondere durch eine hohe Effizienz und Wirtschaftlichkeit bei gleichzeitig geringem Verbrauch von Ressourcen wie Energie und Wasser auszeichnet.

Erfindungsgemäß wird die Aufgabe gelöst durch ein Verfahren, wobei zur Gewinnung von Inhaltsstoffen aus biologischem Material in einem ersten Schritt a) das biologische Material einer Elektroporation unterzogen wird, in einem zweiten Schritt b) der Zellsaft des elektroporierten biologischen Materials abgetrennt wird, in einem dritten Schritt c) das aus Schritt b) erhaltene Material einer Extraktion unterzogen wird und in einem vierten Schritt d) die Inhaltsstoffe aus dem in Schritt b) gewonnenen Zellsaft und dem in Schritt c) gewonnenen Extrakt erhalten werden.

Durch die erfindungsgemäß durchgeführte Elektroporation werden besonders vorteilhaft die Zellen des biologischen Materials, insbesondere die Rübenzellen, unter Einsatz von Hochspannungsimpulsen geöffnet. Deshalb ist eine thermische Öffnung dieser Zellen für eine nachgeschaltete Extraktion nicht notwendig. Die anschließend durchgeführte Vorbehandlung des biologischen Materials ermöglicht die Vorabtrennung des Zellsaftes, insbesondere eines großen oder erheblichen Teils des Zellsaftes, wodurch vorteilhafterweise die Menge der zu extrahierenden Inhaltsstoffe des biologischen Materials in dem erfindungsgemäß nachgeschalteten Extraktionsschritt reduziert wird. Daraus folgt besonders vorteilhaft eine spürbare Reduzierung der erforderlichen Fremdwassermenge, die für die Extraktion der im biologischen Material nach vorgenannter Abtrennung des Zellsafts verbleibenden Inhaltsstoffe eingesetzt werden muss. Dies führt auch zu einer spürbaren Reduzierung des Abzugs, das heißt dem Verhältnis von Extraktmenge zur Menge des eingesetzten biologischen Materials.

Im Zusammenhang mit der vorliegenden Erfindung werden unter "biologischem Material" pflanzliche Rohstoffe und Agrarprodukte mit einem Gehalt an wertvollen Inhaltsstoffen verstanden, hauptsächlich sind dies Zuckerrüben und Zuckerrohr mit Ihrem wichtigen Inhaltsstoff Saccharose, aber auch die Zichorie mit Ihrem wichtigen Inhaltsstoff Inulin, sowie Ölsaaten zur Gewinnung von Öl, Weintrauben zur Gewinnung von Traubensaft oder Früchte, welche zur Gewinnung von pflanzlichen Farbstoffen wie Carotin oder Aromastoffen eingesetzt werden. Weiter werden darunter Pflanzen oder Pflanzenbestandteile verstanden, die zur Gewinnung von Stärke eingesetzt werden.

Im Zusammenhang mit der vorliegenden Erfindung wird unter Extraktion ein Trennverfahren zum Herauslösen von bestimmten Bestandteilen, insbesondere Inhaltsstoffen, aus festen oder flüssigen Substanzgemischen, insbesondere biologischem Material, mit Hilfe geeigneter Lösungsmittel, wobei zwischen dem Lösungsmittel und dem gelösten Stoff, das heißt dem Inhaltsstoff des biologischen Materials, keine chemischen Reaktionen stattfinden. Bei der Gewinnung von wasserlöslichen Inhaltsstoffen wie Saccharose, Inulin, Stärke aus biologischem Material wird bevorzugt Wasser als Extraktionsmittel eingesetzt, beispielsweise bei der Gewinnung von Zucker aus Zuckerrüben, beziehungsweise Zuckerrübenschnitzeln. In einer Variante können zusätzlich oder ausschließlich fettlösliche Inhaltsstoffe durch die Verwendung von überwiegend unpolaren und/oder organischen Lösungsmitteln aus dem biologischen Material gewonnen werden.

In einer besonders bevorzugten Ausführungsform wird Schritt a) des erfindungsgemäßen Verfahrens, nämlich die Elektroporation des biologischen Materials, in einem leitfähigen Medium durchgeführt, wobei das biologische Material einem Hochspannungsfeld ausgesetzt wird. Bevorzugt ist vorgesehen, dass das Hochspannungsfeld in an sich bekannter Weise, beispielsweise über spannungsführende Elektroden, durch Anlegen einer Spannung, insbesondere einer Hochspannung, über das biologische Material erzeugt wird. Bevorzugt werden impulsförmige Hochspannungsverläufe eingesetzt, aber auch periodische Wechselfelder und Gleichspannungsfelder sind vorgesehen. Die Feldstärke beträgt vorzugsweise etwa 0,5 bis 1,5 kV/cm, insbesondere 0,7 bis 1,3 kV/cm. In einer besonders bevorzugten Variante ist die Leitfähigkeit des Mediums, worin sich das biologische Material befindet, so an die Leitfähigkeit des biologischen Materials angepasst, dass ein optimaler des Feldlinienverlauf innerhalb des biologischen Materials zu erreicht wird, vorzugsweise beträgt die Leitfähigkeit circa 0,2 bis 2,5 mS/cm, insbesondere 0,4 bis 2,1 mS/cm. In einer besonders bevorzugten Variante werden zur Elektroporation ganze Früchte, beispielsweise ganze Zuckerrüben eingesetzt. Es wurde gefunden, dass dadurch der für die Elektroporation erforderliche Energiebedarf gegenüber der Elektroporation von zerkleinertem biologischem Material reduziert ist. Selbstverständlich ist auch vorgesehen das biologische Material der Elektroporation auch in zerkleinerter Form zuzuführen, beispielsweise bei der Zuckerrübe in Form von Rübenschnitzeln.

Erfindungsgemäß bevorzugt erfolgt in Schritt b) des erfindungsgemäßen Verfahrens die Abtrennung des Zellsafts aus dem biologischen Material unter geringer mechanische Belastung. Erfindungsgemäß ist vorgesehen, dass die mechanische Belastung, das heißt Druckbeaufschlagung, des biologischen Materials in Schritt a), in Schritt b), in Schritt c), in Schritt d) des erfindungsgemäßen Verfahrens stets, das heißt zu jedem Zeitpunkt und zu jedem Verfahrensabschnitt, weniger als 2 MPa, insbesondere weniger als 1 MPa, vorzugsweise weniger als 0,5 MPa beträgt. Das heißt, dass erfindungsgemäß bevorzugt der Druck auf das biologische Material beziehungsweise die mechanische Belastung des biologische Materials während des gesamten Verfahrens ausschließlich stets weniger als 2 MPa beträgt und bevorzugt keine anderen Kräfte und Belastungen auf das biologische Material ausgeübt werden. Erfindungsgemäß besonders bevorzugt ist die mechanische Belastung des biologischen Materials maximal reduziert und die Druckbelastung stets weniger als 1 MPa, vorzugsweise weniger als 0,5 MPa. Insbesondere wird auf das biologische Material stets kein Druck beziehungsweise keine mechanische Belastung ausgeübt. Die geringe mechanische Belastung ist eine gegenüber dem Stand der Technik bekannten hohen mechanischen Belastung von mehr als 2 MPa, hauptsächlich von cirka 10 bis cirka 30 MPa, welche einem Auspressen des biologischen Materials gleichkommt, signifikant verringert.

Die erfindungsgemäß bevorzugte geringe mechanische Belastung wird normalerweise durch einfaches Walken und/oder Wenden des biologischen Materials beispielsweise in einer Schnecke, welche bevorzugt als Vollschnecke ausgebildet ist, erreicht. Zum Walken und/oder Wenden des biologischen Materials können selbstverständlich auch weitere an sich bekannte Vorrichtungen, die einem solchen Zweck dienen, verwendet werden. Dies sind bevorzugt alle Arten von Transportschnecken wie halboffene Schnecken aber auch Transportbänder, Rüttelstrecken oder Trommeln.

Es wurde überraschenderweise gefunden, dass bereits bei geringer mechanischer Belastung (siehe oben) von durch Elektroporation vorbehandeltem biologischem Material, insbesondere von Rüben beziehungsweise Rübenschnitzeln, ein hoher Anteil von Zellsaft und damit bereits ein hoher Anteil der in dem biologischen Material enthaltenen Inhaltsstoffe gewonnen werden kann. Bekanntermaßen werden thermisch oder elektrisch aufgeschlossene Rüben beziehungsweise Rübenschnitzel in einer herkömmlichen Vorbehandlung, beispielsweise vor einer Extraktion, unter hohem mechanischen Druck von mehr als 2 MPa, hauptsächlich von cirka 10 bis 30 MPa, gepresst, wodurch die Rüben beziehungsweise Rübenschnitzel in mechanisch stark veränderter Form, hauptsächlich in einer musartigen Konsistenz in die diesem Pressen nachfolgenden Verfahrensschritte überführt werden müssen. Demgegenüber bleibt das durch die erfindungsgemäß bevorzugt geringe mechanische Belastung das im Schritt b) zur Abtrennung des Zellsafts behandelte biologische Material in seiner Form und Ausprägung unverändert und kann folglich in einer mechanisch unveränderten Form dem nachfolgenden Schritt c), nämlich der Extraktion, vereinfacht zugeführt werden.

Darüber hinaus ergibt sich in vorteilhafter Weise, dass der in Schritt b) abgetrennte Zellsaft aufgrund der geringen mechanischen Belastung im Wesentlichen klar und nicht verunreinigt durch die bei hoher mechanischer Belastung unweigerlich austretenden Gewebebestandteile, insbesondere Schwebstoffe etc., ist und daher besonders rein gewonnen werden kann. In einer weiteren Variante wird der in Schritt b) abgetrennte Zellsaft noch durch den Zusatz von Flockungsmittel geklärt.

Durch Schritt b) des erfindungsgemäßen Verfahrens wird erfindungsgemäß eine Vorbehandlung des biologischen Materials vor der Extraktion im nachfolgenden Schritt c) erreicht. Diese Vorbehandlung ermöglicht erfindungsgemäß vorteilhaft die Vorabtrennung des Zellsaftes aus dem biologischen Material in besonders effektiver Weise. Es wurde gefunden, dass das erfindungsgemäß vorbehandelte biologische Material insbesondere aufgrund der erfindungsgemäß bevorzugt geringen mechanischen Belastung mechanisch stabil und auch locker gepackt vorliegt, so dass das Extraktionsmittel die Packung sehr gut durchströmen kann, um eine besonders effektive Extraktion zu ermöglichen.

Ein weiterer Vorteil des erfindungsgemäßen Verfahrens besteht darin, dass durch die Vorabtrennung einer großen Menge an Zellsaft und dem darin vorhandenen wesentlichen Anteil an Inhaltsstoffen aus dem biologischen Material die nachgeschaltete Extraktion einen wesentlich geringeren Beitrag bei der Gewinnung der Inhaltsstoffe aus dem biologischen Material leisten muss. Insbesondere ist bei der Verwendung von Zuckerrüben beziehungsweise Zuckerrübenschnitzeln als biologisches Material die in der nachgeschalteten Extraktion abzutrennende Zuckermenge reduziert. Bei der bevorzugten Verwendung von Rüben beziehungsweise Rübenschnitzeln als biologischem Material beträgt die Ausbeute circa 10 bis 30 Masse-% bezogen auf Gesamtmasse an biologischem Material.

Besonders vorteilhaft führt der erfindungsgemäße Effekt zu einer spürbaren Reduzierung der notwendigen Fremdwassermenge, welche für die Extraktion der Inhaltsstoffe des biologischen Materials eingesetzt werden muss, es kommt erfindungsgemäß zu einer spürbaren Reduzierung des Abzugs, das heißt des Verhältnisses von Extraktmenge zur Menge an eingesetztem biologischen Material. Der Abzug wird dabei auf Werte unter 100%, insbesondere auf circa 90% reduziert. Besonders vorteilhaft ergibt sich aus der erfindungsgemäß bedingten Reduzierung des Abzugs eine Steigerung der Reinheit des Extraktes auf Werte über 90%, insbesondere auf circa 91,5% bis 92,5%. In Folge kann für das anschließend an die Extraktgewinnung in Schritt c) erfindungsgemäß bevorzugt vorgesehene Verfahren der Extraktreinigung die Menge an beispielsweise einzusetzendem Kalkstein (Kalkmilch) wesentlich vermindert werden, insbesondere auf Werte von circa 15% bis circa 30%.

Ohne auf die Theorie beschränkt zu sein, wird zum einen durch die Elektroporation in Schritt a), weil durch die Elektroporation bereits eine Öffnung der Zellen stattgefunden hat, und zum anderen durch die Abtrennung einer großen Menge von Zellsaft aus dem elektroporierten biologischen Material in Schritt b) die Anforderung an die nachfolgende Extraktion wesentlich reduziert, so dass die Extraktion des biologischen Materials bei signifikant niedrigen Temperaturen stattfinden kann. Das erfindungsgemäß bevorzugte Verfahren zeichnet sich daher auch dadurch aus, dass der Extraktionsschritt c) bei einer im Vergleich zum Stand der Technik wesentlich erniedrigten Temperatur, das heißt einer Temperatur von 10 bis 65°C, vorzugsweise von 45 bis 60°C, insbesondere 46 bis 60°C, durchgeführt wird.

Selbstverständlich kann die Extraktionstemperatur an die Erfordernisse des biologischen Materials angepasst werden und auch noch wesentlich niedriger oder höher liegen, soweit eine Extraktion noch durchgeführt werden kann. Aufgrund der Verringerung der Extraktionstemperatur wird das biologische Material, beispielsweise Rübenschnitzel, schonender behandelt als bei dem herkömmlichen Verfahren der thermischen Denaturierung. Dadurch ergibt sich erfindungsgemäß vorteilhaft eine Erhöhung der Abpressbarkeit des biologischen Materials, beispielsweise die Rübenschnitzel, um cirka 2%-Punkte an %TS (TS = Trockensubstanz).

Erfindungsgemäß ist auch vorgesehen, dass der gereinigte Extrakt, insbesondere der Dünnsaft I und II, anschließend in einer mehrstufigen Verdampfungsanlage auf cirka 70 % Trockensubstanzgehalt eingedickt wird. Die Energiemenge, welche für die anschließende Verdampfung der Fremdwassers aus dem gewonnenen Extrakt benötigt wird, aufgrund der erfindungsgemäß erreichten Reduzierung der Fremdwassermenge vermindert.

Erfindungsgemäß bevorzugt wird aus dem aus der Extraktion erfindungsgemäß behandelter Zuckerrüben erhaltenen Extrakt und/oder Dünnsaft in einer mehrstufigen Kristallisationsanlage der Zucker gewonnen. Das extrahierte biologische Material, insbesondere die extrahierten Rübenschnitzel, werden anschließend noch mechanisch entwässert und beispielsweise mit Melasse vermischt und bevorzugt nach der thermischen Trocknung als Futtermittel, insbesondere als Futtermittelpellets, vermarktet.

In einer bevorzugten Variante findet die Extraktion in Schritt c) als alkalische Extraktion statt, insbesondere unter Verwendung von Alkalisierungsmitteln wie Kalkmilch und/oder Branntkalk. Unter "alkalisch" wird in diesem Zusammenhang der pH-Wert eines wässrigen Mediums von ca. pH 7 bis ca. pH 14 (bei 20°C) verstanden. In einer bevorzugten Variante wird die alkalische Extraktion bei pH 7,5 bis pH 11, insbesondere bei circa pH 10, beispielsweise pH 10,2 durchgeführt.

Bei einer alkalischen Extraktion können chemische Reaktionen mit dem biologischen Material nicht in allen Fällen ausgeschlossen werden, insbesondere kann ein Anteil hochmolekularem Calciumpektat gebildet werden. Bei bekannten Extraktionstemperaturen von circa 70 bis 75°C sind diese unerwünschten chemischen Reaktionen der alkalischen Extraktion so heftig, dass zum Teil große Mengen an Calciumpektat gebildet werden, welches die Filtration des gewonnenen, vorzugsweise durch Saftreinigung gereinigten Extraktes, wesentlich erschwert, so dass ein solches Verfahren, nicht in die Praxis umgesetzt werden kann. Demgegenüber vermindert die erfindungsgemäß bevorzugte alkalische Extraktion, welche bei niederen Temperaturen durch geführt wird, die Bildung dieser hochmolekularen Verbindungen, wodurch bei der Filtration des gereinigten Extraktes, insbesondere des bei der Zuckerrübenextraktion durch Saftreinigung erhaltenen Dünnsafts I und/oder Dünnsafts II, ein Filtrationskoeffizient von weniger als 1 mm/g erreicht wird.

Der Eintrag der Alkalität auf das biologische Material, bevorzugt Zuckerrübe, Zuckerrohr oder Zichorie, beispielsweise in Form von Kalkmilch, Calciumhydroxid, Calciumsaccharat oder Branntkalk, findet bevorzugt bereits unmittelbar nach der Elektroporation (Schritt a)) statt, insbesondere in einem Zwischenbunker vor der weiteren Verarbeitung des biologischen Materials in Schritt b). In einer weiteren Variante wird die Alkalität bei der Abtrennung des Zellsafts in Schritt b) eingebracht. In einer weiteren Variante wird die Alkalität ummittelbar vor der Durchführung der Extraktion (Schritt c)) eingebracht.

In einer bevorzugten Ausführungsform der Erfindung erfolgt die Alkalisierung des biologischen Materials, also bevorzugt der Rüben beziehungsweise Rübenschnitzel, des Zuckerrohrs oder der Zichorie, durch Zugabe des Alkalisierungsmittels direkt in die Schneidmaschine. Dies hat den Vorteil einer Teildesinfektion des biologischen Materials.

In einer bevorzugten Ausführungsform der Erfindung erfolgt die Alkalisierung des biologischen Materials durch Zugabe des Alkalisierungsmittels in den Bunker des biologischen Materials, insbesondere den Rübenbunker, oder auf den Transportweg zum Bunker, insbesondere Rübenbunker. Dies hat den Vorteil einer Teildesinfektion.

Erfindungsgemäß bevorzugt wird die Alkalität normalerweise in Form wässriger Lösungen in das biologische Material eingebracht, bevorzugt aufgesprüht. In einer weiteren Variante wird zum Zwecke des Eintrags der Alkalität auf das biologische Material mindestens ein alkalischer Stoff, insbesondere Kalk wie Branntkalk, als Feststoff, bevorzugt in Pulverform, in das Verfahren eingebracht.

Durch den Eintrag der Alkalität auf das biologische Material, insbesondere in einer frühen Phase des erfindungsgemäßen Verfahrens, bevorzugt in Schritt b) oder unmittelbar davor, kommt es erfindungsgemäß besonders vorteilhaft zu einer Saftreinigung des abgetrennten Zellsafts bereits unmittelbar während des Vorgangs der Abtrennung aus dem biologischen Material. In der bevorzugten Anwendung bei Rüben oder Rübenschnitzeln findet so eine Vorabscheidung von Nichtzuckerstoffen, hauptsächlich Proteinen, statt. Dabei verbleibt ein großer Teil der Nichtzuckerstoffe adsorbiert oder koaguliert an den Rübenschnitzeln auch bis nach der Extraktion haften. Selbstverständlich kann anschließend auch eine ergänzende Saftreinigung des abgetrennten Zellsafts in an sich bekannter Weise durchgeführt werden.

Durch den Eintrag der Alkalität auf das biologische Material, wird außerdem eine Verminderung des Infektionsrisikos des biologischen Materials und die Erhöhung der mikrobiologischen Stabilität des biologischen Materials und des abgetrennten Zellsafts während der Verarbeitung erreicht. Die mikrobiologische Stabilität liegt dabei bei circa 10⁴ KBE/ml.

In einer weiteren bevorzugten Variante wird im erfindungsgemäßen Verfahren, bevorzugt in Schritt b), dem biologischen Material mindestens ein Hilfsstoff zugeführt. Im Zusammenhang mit der vorliegenden Erfindung wird unter einem "Hilfsstoff" eine Zusammensetzung oder chemische Reinsubstanz verstanden, welche im gewonnenen Inhaltsstoff, bevorzugt dem gewonnenen Lebensmittel, keinerlei Funktion innehat. Dies sind Betriebsstoffe wie Kondensat, aber auch Prozesswasser, Lösemittel, Desinfektionsmittel wie Formaldehyd oder Schaumdämpfungsmittel. Bevorzugt sind dies auch Flockungshilfsmittel wie kationische oder anionische Flockungshilfsmittel, Substanzen für den Eintrag von Alkalität und/oder von Calciumionen wie Kalkmilch, Branntkalk, Calciumhydroxid, Calciumsaccharat, Calciumsulfat und andere Calciumsalze und/oder Aluminiumsalze. Der erfindungsgemäß bevorzugt zugeführte mindestens eine Hilfsstoff wird normalerweise in Form einer Lösung in das biologische Material eingebracht, bevorzugt aufgesprüht. In einer weiteren Variante wird der mindestens eine Hilfsstoff als Feststoff, bevorzugt in Pulverform, eingebracht. Die eingetragenen Hilfsstoffe bewirken auch eine Vorreinigung des abgetrennten Zellsafts.

Besonders vorteilhaft wird durch die erfindungsgemäße Elektroporation des biologischen Materials in Schritt a) deren Zellwände derart geöffnet, was, insbesondere in Schritt b) während der Abtrennung von Zellsaft aus dem biologischen Material, den Eintrag von Alkalität und/oder Calciumionen in das biologische Material erleichtert. Insbesondere durch die erfindungsgemäß bevorzugte Kombination von Elektroporation in Schritt a) und der alkalischen Extraktion in Schritt c) kommt es zu einer weiteren Steigerung der Entwässerbarkeit des biologischen Materials nach Abschluss des erfindungsgemäßen Verfahrens, beispielsweise durch Abpressen um bis zu cirka 8%-Punkte Trockensubstanzgehalt (%TS).

Bevorzugter Gegenstand der vorliegenden Erfindung ist daher auch ein Verfahren zur Erhöhung der Abpressbarkeit von extrahiertem biologischem Material, insbesondere von Zuckerrübenschnitzeln, und damit des bei der Abpressung erreichbaren Trockensubstanzanteils, dadurch gekennzeichnet, dass in einem ersten Schritt eine Elektroporation des biologischem Materials, insbesondere von Zuckerrüben, und in einem weiteren Schritt eine alkalische Extraktion des elektroporierten biologischen Materials, insbesondere elektroporierter Zuckerrüben beziehungsweise Zuckerrübenschnitzel, Zuckerrohr oder Zichorie, durchgeführt wird und anschließend extrahiertes biologisches Material mit erhöhter der Abpressbarkeit erhalten wird.

Ein weiterer bevorzugter Gegenstand der vorliegenden Erfindung ist daher auch ein Verfahren zum Erhalt von extrahiertem biologischem Material, insbesondere von extrahierten Zuckerrübenschnitzeln, Zuckerrohr oder Zichorie, mit hohem Trockensubstanzanteil, vorzugsweise von circa 38% TS, dadurch gekennzeichnet, dass in einem ersten Schritt das biologische Material, insbesondere Zuckerrüben, elektroporiert werden, in einem weiteren Schritt das elektroporierte biologische Materials, insbesondere elektroporierte Zuckerrüben beziehungsweise Zuckerrübenschnitzel, alkalisch extrahiert werden, in einem nachfolgenden Schritt das elektroporierte biologische Material, insbesondere elektroporierte Zuckerrüben beziehungsweise Zuckerrübenschnitzel, vorzugsweise in an sich bekannter Weise abgepresst wird und anschließend extrahiertes biologisches Material mit erhöhtem Trockensubstanzgehalt erhalten wird.

In einer weiteren bevorzugten Variante wird zusätzlich zwischen den Verfahrensschritten a) und b) in einem weiteren Verfahrensschritt das biologische Material zerkleinert, beispielsweise bei der Zuckerrübe zu Rübenschnitzel. Dies deshalb, um die Abtrennung von Zellsaft aus dem elektroporierten biologischem Material noch weiter zu erleichtern.

In einer bevorzugten Variante dieses Verfahrens findet der Verfahrensschritt b) zusätzlich bereits innerhalb eines an dem zur Aufnahme des biologischen Materials ausgebildeten Abschnitts der Schnecke angeordneten Übergabeschacht, beziehungsweise Pufferschacht statt. Der auf das biologische Material ausgeübte mechanische Vordruck beträgt sowohl im Übergabeschacht als auch in der Vollschnecke bevorzugt stets weniger als 2 MPa, besonders bevorzugt weniger als 1 MPa, vorzugsweise weniger als 0,5 MPa. Insbesondere bevorzugt wird kein Vordruck ausgeübt. Selbstverständlich dient der bevorzugt vorgesehene Übergabeschacht dazu, das biologische Material für die Aufnahme in die Schnecke zwischenzuspeichern und anzustauen, der dabei auf das biologische Material ausgeübte Druck wird als vernachlässigbar angesehen. Insbesondere ist er gerade so hoch, dass das im Übergabeschacht angestaute biologische Material in an sich bekannter Weise mit guter Effizienz in die Schnecke übergeben wird und die Schnecke einen guten Füllungsgrad aufweist.

In einer Variante sind der Außenmantel und/oder die Schneckengänge, das heißt Schraube, der erfindungsgemäß bevorzugt eingesetzten Schnecke perforiert. Das heißt, sie weisen Löcher auf, wodurch der aus dem biologischen Material abgetrennte Zellsaft aus der Schnecke abfließen kann. Besonders bevorzugt sind Außenmantel und Schraube perforiert. Der, insbesondere bei dem Transport des biologischen Materials durch die Schnecke, frei werdende Zellsaft, das heißt Transportsaft oder Fördersaft, dringt durch die perforierten Schneckengänge und/oder den perforierten Außenmantel der Schnecke und sammelt sich in einer an der Schnecke erfindungsgemäß normalerweise angeordneten, insbesondere die Schnecke umgebenden Wanne. Diese Wanne mündet normalerweise in eine Ablaufleitung, bevorzugt am untersten Punkt.

In einer weiteren Variante ist der Übergabeschacht, das heißt der Pufferschacht, worin sich das elektroporierte Material vor der Übergabe in den zur Aufnahme des biologischen Materials ausgebildeten Abschnitts der Schnecke sammelt, mit einem Abfluss versehen, vorzugsweise am tiefsten Punkt des Pufferschachts. Der im Pufferschacht aus dem biologischen Material abgetrennte Zellsaft fließt zu einem wesentlichen Anteil über den bevorzugt vorgesehenen Abfluss ab.

Gegenstand der vorliegenden Erfindung ist deshalb auch eine Vorrichtung zur Gewinnung von Inhaltsstoffen aus biologischem Material, welche normalerweise zur Durchführung des erfindungsgemäßen Verfahrens eingesetzt wird. Erfindungsgemäß weist diese Vorrichtung eine Vorrichtung, insbesondere eine Kammer zur Elektroporation des biologischen Materials sowie mindestens eine Vollschnecke zur Aufnahme des elektroporierten biologischen Materials zum Zwecke der Abtrennung von Zellsaft aus dem biologischen Material und einen Extraktor zur Extraktion des biologischen Materials auf. Erfindungsgemäß ist die mindestens eine Vollschnecke an ihrem Außenmantel und/oder deren Schneckengänge perforiert. Vorzugsweise ist an der Vollschnecke eine Wanne zur Aufnahme des in der Vollschnecke abgetrennten Zellsafts angeordnet, welche bevorzugt die Vollschnecke umschließt, insbesondere hermetisch abschließt. Die Funktion der erfindungsgemäßen mindestens einen Vollschnecke umfasst im Wesentlichen, das biologische Material zu walken, das heißt mechanisch gering zu belasten. Vorzugsweise ist dies mit der bevorzugten weiteren Funktion der Vollschnecke, nämlich dem Transport des biologischen Materials durch die Vorrichtung, vorzugsweise von der Elektroporationsvorrichtung zum Extraktor, verbunden.

Erfindungsgemäß bevorzugt ist der Extraktor ein Turmextraktor. In einer Variante ist der Extraktor ein Trogschnecken-Extraktor wie ein DDS-Extraktor. In einer weiteren Variante ist der Extraktor ein Trommelzellenextraktor wie eine RT-Trommel.

In einer weiteren bevorzugten Ausführungsform enthält die erfindungsgemäße Vorrichtung ein Schnitzelwerk, das heißt eine Schneidmaschine, vorzugsweise eine Trommelschneidmaschine, welches im Transportweg des biologischen Materials aus der Elektroporationsvorrichtung zur Vollschnecke angeordnet ist und das elektroporierte biologische Material vor der Übergabe an die Vollschnecke weiter zerkleinert. In einer Variante ist das Schnitzelwerk mit einem Zwischenbunker zur Aufnahme des elektroporierten biologischen Materials vor der Zerkleinerung versehen, welches primär durch die Übereinanderstapelung des biologischen Materials die nötige Druckvorlage für dessen Zerkleinerung bereitstellt.

Vorzugsweise ist dem zur Abgabe des transportierten biologischen Materials ausgebildete Abschnitt der Schnecke zusätzlich ein Maischebehälter zugeordnet, worin das aus der Schnecke austretende biologische Material gesammelt wird, bevorzugt zum Zwecke der anschließenden Extraktion des biologischen Materials im Extraktor.

In einer bevorzugten Ausführungsform der erfindungsgemäßen Vorrichtung ist zusätzlich mindestens eine Dosiervorrichtung zum Eintrag von Hilfsstoffen und/oder Alkalität vorgesehen. Diese Dosiervorrichtung enthält in einer Variante mindestens eine Spülleitung mit mindestens einem damit verbundenen Düsenkopf für das Sprühen von Lösungen von Hilfsstoffen und/oder alkalisierenden Mitteln wie Kalkmilch auf das sich, bevorzugt in der Vollschnecke befindliche, biologische Material. In einer weiteren Variante ist die mindestens eine Dosiervorrichtung eine Vorrichtung, die dem Eintrag von Feststoffen, vorzugsweise pulverförmigen Medien dient, insbesondere ist dies ein pneumatischer Dosierer und/oder ein Spiralförderer.

Vorzugsweise ist die Dosiervorrichtung in einem Dosierbereich der Vollschnecke, insbesondere über ihrem Außenmantel, angeordnet. In einer Variante ist die Dosiervorrichtung in einem Dosierbereich des Zwischenbunkers angeordnet. In einer weiteren Variante ist die Dosiervorrichtung bei in einem Dosierbereich des Maischebehälters angeordnet. In diesem Zusammenhang wird unter einem "Dosierbereich" derjenige umgrenzte Raum verstanden, wovon über die gewählte Dosiervorrichtung das Dosiergut, das heißt die vorgenannten Hilfsstoffe, alkalisierenden Mittel etc., in beziehungsweise auf das biologische Material gebracht werden kann.

In einer weiteren bevorzugten Variante befindet sich der zur Aufnahme des elektroporierten biologischen Materials ausgebildete Abschnitt der Schnecke, vorzugsweise an deren Anfang, an einem unteren Punkt, während sich der zur Abgabe des transportierten biologischen Materials ausgebildete Abschnitt der Schnecke, vorzugsweise an deren Ende, an einem oberen Punkt befindet, welcher über dem vorgenannten unteren Punkt liegt. Das heißt, die erfindungsgemäß vorgesehene Vollschnecke ist entlang eines Gefälles angeordnet, wobei das biologische Material in der Vollschnecke von dem unteren Punkt zum oberen Punkt entgegen das Gefälle transportiert wird.

Weitere vorteilhafte Ausführungsformen ergeben sich aus den Unteransprüchen.

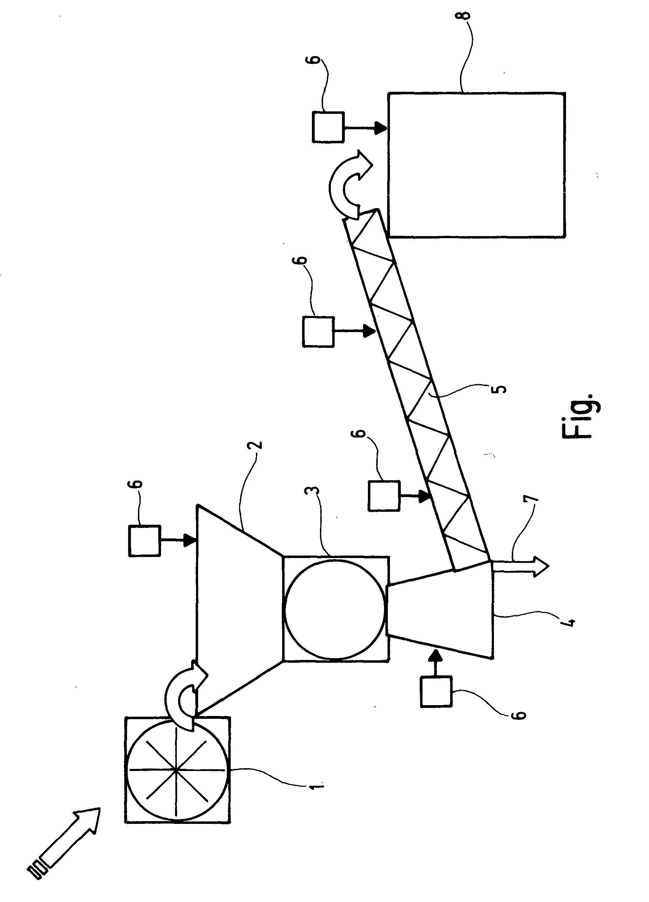

Die erfindungsgemäße Vorrichtung wird durch die Figur näher erläutert: Die Figur zeigt eine schematische Darstellung einer bevorzugten Ausführung der erfindungsgemäßen Vorrichtung, welche eine Vorrichtung zur Elektroporation des biologischen Materials (1), ein Schneidwerk (3) zur Zerkleinerung des elektroporierten biologischen Materials mit Zwischenbunker (2) und Übergabeschacht (4), eine perforierte Vollschnecke (5) mit Auffangwanne, mindestens eine Dosiervorrichtung (6) zum Eintrag von Hilfsstoffen auf das biologische Material, einen Abfluss (7) zur Sammlung von Säften aus dem Übergabeschacht und aus der Vollschnecke und einen Extraktor (8) aufweist.

Die Erfindung wird anhand der folgenden Beispiele näher erläutert:

### Beispiel 1: Alkalische Extraktion von elektroporiertem Rübenmaterial

Unmittelbar geerntete oder gelagerte Zuckerrüben werden gewaschen und anschließend in grob geschnitzelter Form oder ungeschnitten in einer Elektroporationsanlage (1) mit Hochspannungspulsen von 0,7 bis 1,5 kV/cm beaufschlagt. Dabei befinden sich die Rüben beziehungsweise Rübenschnitzel in einem leitfähigen Medium, mit einer Leitfähigkeit von 0,4 bis 2,1 mS/cm. Durch die Elektroporation werden die Zellwände in an sich bekannter Weise aufgeschlossen.

Die elektroporierten Rüben beziehungsweise Rübenschnitzel werden anschließend in einen Zwischenbunker (2) unmittelbar über der Schneidmaschine (3) befördert, gelangen von dort aus in das Schneidwerk (3), werden zerkleinert und gelangen dann über einen Übergabeschacht (4) in eine Vollschnecke (5), deren Außenmantel sowie deren Schneckengänge perforiert sind, um den Abfluss des aus den Rübenschnitzeln austretenden Zellsafts, das heißt Transportsaft beziehungsweise Fördersaft, zu ermöglichen. In den Zwischenbunker wird zur Minderung der mikrobiologischen Aktivitäten Kalkmilch dosiert.

Die geschlossene Vollschnecke hat die Aufgabe, die elektroporierten Schnitzel zur Schnitzelmaische im dafür vorgesehenen Maischebehälter des Extraktors (8) zu transportieren. Ihre Anordnung weist ein in Transportrichtung aufwärts führendes Gefälle auf. Das heißt, der tiefste Punkt der Vollschnecke liegt unmittelbar unter der Übergabestelle (4) zwischen Schneidmaschine (3) und Schnecke (5). Ihr höchster Punkt liegt unmittelbar vor dem Einfallschacht der Schnitzelmaische. Zwischen Ausgang Schneidmaschine und Eingang dieser als Transportschnecke ausgebildeten Vollschnecke befindet sich ein als Pufferschacht ausgebildeter Übergabeschacht (4). Darin sammeln sich die frischen elektroporierten Rübenschnitzel. Am tiefsten Punkt der Schnecke befindet sich ein Abfluss (7). Dieser Abfluss dient zur Sammlung von Zellsäften, die während des Transportes in der Schnecke und/oder während der mechanischen Druckbeaufschlagung im Übergabeschacht aus den elektroporierten Schnitzeln austreten.

Die Schnecke (5) hat zum einen die Aufgabe, die elektroporierten Schnitzel zur Schnitzelmaische zu transportieren, zum anderen hat sie aber auch die Aufgabe, das Schnitzelmaterial bei dem Transport entgegen das Gefälle mechanisch zu beaufschlagen beziehungsweise zu walken. Der mechanische Vordruck aus dem Übergabeschacht beträgt dabei stets weniger als 2 MPa. Dieser maximale Druckwert gilt für die gesamte Anlage, das heißt auf dem Weg von der Schneidmaschine zur Schnitzelmaische durch die beschriebene Anlage unterliegt das elektroporierte Schnitzelmaterial einem Druck, der zu jedem Zeitpunkt unterhalb 2 MPa liegt.

Der bei dem Transport der Schnitzel durch die Schnecke (5) frei werdende Transportsaft dringt durch den perforierten Außenmantel der Schnecke und sammelt sich in einer die Vollschnecke umgebenden Wanne, welche am untersten Punkt der Schnecke in den oben beschriebenen Ablauf (7) mündet. Während des Transportes der elektroporierten Schnitzel in der Vollschnecke treten durch die Perforation der Vollschnecke und die Perforation der Außenwand der Schnecke Zellsäfte der elektroporierten Schnitzel aus und werden in der unter der Vollschnecke angebrachten Wanne aufgefangen und zum Abfluss (7) geleitet. Dabei umschließt die Wanne die Vollschnecke hermetisch.

Zwischen Wanne und Außenmantel der Schnecke sind in axialer Richtung der Schnecke Spülleitungen angebracht. Die Spülleitungen besitzen Düsenköpfe, welches als Dosiervorrichtung (6) dienen, über die Hilfsstoffe, von außen auf den Außenmantel der Vollschnecke aufgesprüht werden. In einer Modifikation sind unmittelbar vom Anfang der Vollschnecke in Transportrichtung der Vollschnecke bis etwa zu dem Punkt an der Vollschnecke, ab dem die Schnitzel bei Normalbetrieb der Schnecke noch eine weitere Verweilzeit von ungefähr 5 Minuten in der Schnecke haben, mehrere Dosierstellen mit Düsen im Inneren der vollen Schnecke angebracht. Über diese Düsen werden in die transportierte Schnitzelpackung Hilfsstoffe dosiert. Über die Hilfsstoffzugabestellen im Zwischenbunker und in der Vollschnecke wird den Schnitzeln auf ihrem Weg zur Schnitzelmaische eine Calciumsaccharatlösung zugegeben. Alternativ wird den Schnitzeln Kalkmilch oder Trockenkalk zugegeben. Der größte Teil dieser Lösung wird von den Schnitzeln absorbiert. Die Schnitzel nehmen dabei Calcium auf und werden so vorbereitet für eine alkalische Extraktion, welche in an sich bekannter Weise durchgeführt wird. Die Calciumsaccharat- beziehungsweise Kalk- oder Kalkmilchmengen, die von den Schnitzeln nicht aufgenommen werden, sammeln sich am tiefsten Punkt der Schnecke und werden dort zusammen mit dem Zellsaft, das heißt dem Transportsaft, abgeführt und weiterverarbeitet.

Die vor der Schnecke gewalkten Rübenschnitzel werden über den Maischenbehälter einer Gegenstromextraktionsanlage zugeführt und in dieser extrahiert und der Extrakt aufgefangen. Die Temperatur der Extraktion beträgt von 45 bis 60°C; bevorzugt wird eine Temperatur deutlich über 45°C, maximal aber 60°C, gewählt. Der Extraktor ist ein Turmextraktor, ein Trogschnecken-Extraktor beziehungsweise ein Trommelzellenextraktor. Im Extraktor werden die Schnitzel im Gegenstrom zum Extraktionsmittel (sog. Frischwasser) extrahiert.

Im Anschluss daran wird eine Kalkmilch-Kohlensäure-Saftreinigung durchgeführt. Das gereinigte Extrakt (Dünnsaft I und II) wird konventionell weiterverarbeitet; das heißt nach der Eindickung des Safts zu einem Sirup wird in Kristallisatoren durch weitere Verdampfung und sukzessive Kristallisation der Zucker gewonnen. Der abgetrennte Calciumcarbonatschlamm wird konventionell über Filterpressen entwässert und als Düngemittel, sog. Carbokalk, vermarktet.

Dem in der Vollschnecke und/oder in dem Übergabeschacht getrennten Zellsaft wird nach vorangegangener Alkalisierung ein Flockungshilfsmittel zudosiert. Der Transportsaft wird dann einem konventionellen statischen Dekanteur zugeführt. Der Unterlauf des Dekanteurs wird abgezogen und in die Vorkalkungsanlage der parallel durchgeführten Aufarbeitung von Extrakt zugeführt. Der Klarlauf des Dekanteurs hingegen wird seiner weiteren Verwertung zugeführt, welche die Vereinigung mit Dünnsaft aus der Aufarbeitung des Extraktes umfasst. Parallel dazu wird das anfallende Extrakt einer konventionellen Saftreinigung unterzogen.

Die extrahierten Schnitzel werden in Spindelpressen abgepresst. Das abgepresste Presswasser wird in den Extraktor zurückgeführt. Die Pressschnitzel werden konventionell thermisch entwässert, das heißt in Niedertemperaturtrocknern, Hochtemperaturtrocknern beziehungsweise Verdampfungstrocknern.

### Beispiel 2: Verfahren im Technikumsmaßstab

Im Folgenden sind Versuche im Technikumsmaßstab (verarbeitete Rüben: 6 kg/h) dargestellt, um die Vorteilhaftigkeit des Verfahrens zu illustrieren.

### Verfahrensschritt Schneiden und Alkalisierung der Rüben

Rüben wurden in einem Elektroporationsapparat bei einer Feldstärke von 0,7 bis 1,5 kV/cm elektroporiert und anschließend in einem Technikumsschneidwerk (sog. Alexanderwerk) geschnitzelt. Dann wurden die Schnitzel in einen Mischer überführt und mit Kalkmilch (Kalkhydrat-Lösung) versetzt. Dabei wurde darauf geachtet, dass die Schnitzeltemperatur unter 20 °C betrug. Die Menge an Kalkhydrat-Lösung (Konzentration: 220 g CaO/I) entspricht einer Zugabe von wirksamer Alkalität von 0,3 bis 0,5 g CaO/100 g Rüben. Die alkalisierten Rüben wurden in eine Trogschnecke vom DDS-Typ überführt. Der Außenmantel und die Schneckengänge der Förderschnecke sind perforiert. Die Schnitzelmasse wurde durch die Förderschnecke unter sanftem Walken gefördert. Auf dem Wege wurden ca. 20 bis 30 % auf eingesetzte Rübenmasse alkalisierter Zuckerrübensaft abgetrennt. Der alkalische Zuckerrübensaft (pH-Wert: 11 bis 12) wurde aufgefangen.

### Verfahrensschritt Extraktion

Die alkalischen Schnitzel wurden in einen Trogschneckenextraktor vom DDS-Typ überführt und dort extrahiert. Schnitzel und Extraktionswasser (mit Kalkmilch schwach alkalisiertes und aufgehärtetes Wasser (pH = 9,5; 80 °dH) wurden im Gegenstrom zum Schnitzelmaterial geführt. In einer quasi-kontinuierlichen Arbeitsweise wurden vorentsaftete Schnitzel in einer Größenordnung von 4,8 kg pro Stunde bei einer Frischwasserzugabe von 60 bis 80 % auf Schnitzelmasse extrahiert. Die Extraktion wurde bei einer gegenüber dem konventionellen Verfahren reduzierten Temperatur von 60 °C durchgeführt.

Dies wirkt sich insbesondere vorteilhaft in einem geringeren Energieverbrauch bei dem Verfahren und einer schonenderen Behandlung des Schnitzelmaterials aus. Diese äußert sich insbesondere durch eine bessere Extraktqualität (höhere Reinheit) und eine bessere Abpressbarkeit bei der nachgeschalteten Abpressung der Schnitzel.

Als Hauptvorteil der alkalischen Extraktion in Kombination mit der Elektroporation zeigte sich bei den Versuchen eine gegenüber dem konventionellen Verfahren höheren Abpressbarkeit der extrahierten Schnitzel (Abpressung in einer Stempelpresse), was zu einem deutlichen, um ca. 8%-Punkte höheren Trockensubstanzgehalt der gepressten Schnitzel führte. Beispielsweise wird der Trockensubstanzgehalt auf 38% TS gegenüber 30% TS bei herkömmlichen Verfahren erhöht. Dies hat bei der anschließenden thermischen Entwässerung der Schnitzel auch einen signifikant geringeren Energieverbrauch zur Folge.

Die Extraktreinheit liegt im Bereich 91,5 bis 92,5 %, und damit signifikant höher als beim konventionellen Verfahren. Wesentliche Nichtzuckerstoffe, die beim konventionellen Verfahren extrahiert werden, wie z. B. Eiweißstoffe und Pektine, verbleiben bei der alkalischen Behandlung in den Schnitzeln und erhöhen dessen Futtermittelwert bei der nachgeschalteten Verarbeitung zu Futtermittelpellets.

Bei der technischen Realisierung des Verfahrens wird das bei der Abpressung der extrahierten Schnitzel gewonnene Presswasser in die Extraktionsanlage zurückgeführt. Dabei wirkt sich die hohe Reinheit des Presswassers, welche etwa 89% beträgt, vorteilhaft aus.

### Verfahrensschritt Saftreinigung

Der alkalische Fördersaft und der alkalische Extrakt wurden vereinigt. Die Saftreinigung wurde in einer Laborsaftreinigungsapparatur durchgeführt (Dreihalskolben mit Temperiermöglichkeit). Die Mischung wurde mit Kalkmilch (Konzentration 220 g CaO/I) versetzt (bis zu einer Alkalität von 0,4 bis 0,6 g CaO/100 ml Extrakt). Daraufhin wurde eine alkalische Behandlung des Safts bei 85 °C durchgeführt. Dieser Verfahrensschritt dient dem Abbau von Invertzucker und von Säureamiden, die den weiteren Prozess stören würden. Die weiteren Verfahrensschritte entsprechen weitgehend dem konventionellen Verfahren. In der ersten und zweiten Carbonatation wird durch Einleiten von Kohlendioxid Calciumcarbonat ausgefällt, welches die im Saft vorhandenen Nichtzuckerstoffe adsorptiv bindet und durch die nachgeschaltete Filtration aus dem Saft entfernt. Am Ende der Saftreinigung erhält man einen gereinigten Extrakt.

Die Versuche haben ergeben, dass der gereinigte Extrakt von hoher Qualität ist, das heißt von geringer Farbe (ca. 600 bis 800 I.E.) gegenüber dem konventionellen Verfahren (über 1000 I.E.). Auch die Stabilität des gereinigten Extrakts gegenüber einer thermischen Belastung bei der anschließenden Eindampfung des Safts ist hoch. Beim Labortest (Sieden für eine Stunde unter Rückfluss des Kondensats) ergab sich eine geringe Saftverfärbung von lediglich ca. 25 I.E. Ein Nachteil des Verfahrens ist der relativ hohe Gehalt an löslichen Calciumionen, den sog. Kalksalzen.

Auf den Verfahrensschritt der Vorkalkung, der eine progressive Voralkalisierung unter milden Bedingungen von Temperatur und Alkalität vorsieht, kann verzichtet werden.

Die abgetrennten Calciumcarbonat-Niederschläge enthielten weniger Nichtzuckerstoffe als bei dem konventionellen Verfahren. Dies erhöht den Düngemittelwert des Carbokalks.

### Zusammenfassung der Ergebnisse:

- Durch die Vorbehandlung der Rüben durch die mechanische Druckbeanspruchung in der Vollschnecke und im Übergabeschacht wird ein wesentlicher Anteil des Zellsaftes aus dem Rübenmaterial abgetrennt. Die Ausbeute liegt hierbei bei cirka 10 bis 30% Zellsaft bezogen auf die Masse des eingebrachten Rübenmaterials.
- Durch die Vorabtrennung des Zellsafts wird eine Reduzierung der in der nachgeschalteten Extraktion abzutrennenden Zuckermenge erreicht, was zu einer spürbaren Reduzierung des Abzugs auf circa 90% führt.
- Durch die Reduzierung des Abzugs ergibt sich eine Steigerung der Reinheit des Extraktes auf circa 92%.
- Das elektroporierte Schnitzelmaterial wird in der Gegenstromextraktion bei niedriger Temperatur, das heißt bei einer Temperatur von 45 bis 60°C, bevorzugt von stets mehr als 45°C und stets weniger als 60°C, extrahiert. Durch die schonende Behandlung des Schnitzelmaterials bei der Extraktion ergeben sich weitere Vorteile für die Qualität (Reinheit) des Extrakts.
- Die Abpressbarkeit der Schnitzel nach der alkalischen Extraktion ist erhöht. Der Trockensubstanzgewinn beträgt 8%-Punkte, beispielsweise von 30% TS auf 38% TS.
- Durch die Verringerung der benötigten Frischwassermenge ist die erforderliche Wasserverdampfung reduziert.
- Die Vorabtrennung des Transportsafts erhöht die separate Behandlung in einer nachgeschalteten Saftreinigungsanlage. Aufgrund dessen hoher Reinheit bietet sich eine Vorabtrennung der in dem Transportsaft gelösten Nichtzuckerstoffe an.
- Die Mischung aus hochreinem Transportsaft und Extrakt der nachgeschalteten Extraktion führt zu reineren Säften als in konventionellen Verfahren erhältlich sind.
- Durch die Alkalisierung der Rübenschnitzel und des daraus abgetrennten Zellsafts wird deren mikrobiologische Stabilität auf einen Wert von 10⁴ KBE/ml erhöht.

## Patentansprüche

1. Verfahren zur Gewinnung von Inhaltsstoffen aus biologischem Material, nämlich Zuckerrohr oder Zichorie, enthaltend die Schritte:
a) Elektroporation des biologischen Materials,
b) Abtrennung von Zellsaft aus dem elektroporierten biologischen Material,
c) Extraktion des elektroporierten biologischen Materials,
d) Erhalt der Inhaltsstoffe des biologischen Materials im Zellsaft und im Extrakt.

2. Verfahren nach Anspruch 1, **dadurch gekennzeichnet, dass** das biologische Material in Schritt a) in einem leitfähigen Medium einem Hochspannungsfeld ausgesetzt wird.

3. Verfahren nach Anspruch 1 oder 2, **dadurch gekennzeichnet, dass** in Schritt b) die Abtrennung des Zellsafts von dem biologischen Material durch mechanische Belastung, vorzugsweise durch Walken, erfolgt.

4. Verfahren nach Anspruch 3, wobei die mechanische Druckbelastung des biologischen Materials stets weniger als 2 MPa beträgt.

5. Verfahren nach einem der vorhergehenden Ansprüche, **dadurch gekennzeichnet, dass** Schritt b) in einer Schnecke, vorzugsweise in einer Vollschnecke erfolgt.

6. Verfahren nach einem der vorhergehenden Ansprüche, **dadurch gekennzeichnet, dass** in Schritt b) dem biologischen Material Hilfsstoffe bevorzugt Kalk und/oder Kalkmilch zugeführt werden.

7. Verfahren nach einem der vorhergehenden Ansprüche, **dadurch gekennzeichnet, dass** Schritt c) bei einer Temperatur von 0 bis 65°C, vorzugsweise von 45 bis 60°C durchgeführt wird.
